**Europäisches Patentamt**

**European Patent Office**

**Office européen des brevets**

(11) Veröffentlichungsnummer: **0 219 832**
**A1**

## (12) EUROPÄISCHE PATENTANMELDUNG

(21) Anmeldenummer: **86114427.7**

(22) Anmeldetag: **17.10.86**

(51) Int. Cl.⁴: **F 16 K 31/00**
**F 16 K 21/00**

(30) Priorität: **21.10.85 DE 3537385**

(43) Veröffentlichungstag der Anmeldung:
**29.04.87 Patentblatt 87/18**

(84) Benannte Vertragsstaaten:
**AT CH DE FR LI**

(71) Anmelder: **Armingeon, Eberhard**
**Ringstrasse 11**
**D-7538 Keltern(DE)**

(72) Erfinder: **Armingeon, Eberhard**
**Ringstrasse 11**
**D-7538 Keltern(DE)**

(74) Vertreter: **Fass, Gerhard**
**Patent u. Zivilingenieur Achalmstrasse 25**
**D-7306 Denkendorf(DE)**

(54) **Hydraulisch regelbares Flüssigkeitssteuerventil zur Durchflusssteuerung flüssiger Medien.**

(57) Die Erfindung betrifft ein hydraulisch, in Abhängigkeit der Betätigungsdauer oder -häufigkeit geregeltes Flüssigkeitssteuerventil, das zur Vermeidung eines unbeabsichtigten und unkontrollierten Flüssigkeitsaustritts zwei in einem gemeinsamen, durch eine gemeinsame Schaltwippe oder durch zwei getrennte Taster zu betätigende Steuerventile zum Öffnen und Schließen des Flüssigkeitssteuerventils aufweist, die in einem gemeinsamen Grundkörper angeordnet einen zweiteiligen Aufbau besitzen und zur Abdichtung gegenüber der Atmosphäre einerseits im oberen Bereich eine elastische Membrane und andererseits im unteren Bereich des Steuerkolbens eine Ringdichtung aufweisen, die in Abhängigkeit des anstehenden Wasser- und Federdruckes geschlossen wird und zur weiteren Erhöhung der Schaltsicherheit das Schließventil mittels einem zwischen Schaltwippe und Grundkörper angeordneten Fixierelement in der Schließlage lösbar festlegbar ist.

**EP 0 219 832 A1**

Anmelder: Eberhard Armingeon

Ringstraße 11
7538 Keltern 2

0219832

Hydraulisch regelbares Flüssigkeitssteuerventil
zur Durchflußsteuerung flüssiger Medien

Die Erfindung bezieht sich auf ein hydraulisch geregeltes Ventil zur Steuerung des Durchflußes flüssiger Medien, wie beispielsweise zur Regulierung des Wasseraustritts an einer Wasserentnahmestelle in Form, eines Wasserhahns, einer Mischbatterie oder dgl.

Aus der deutschen Patentanmeldung P 3 439 235 ist ein hydraulisch geregeltes Wasserventil bekannt, welches in einem Gehäuse zwei durch Stößel betätigte Ventile aufweist, die abhängig von ihrer Betätigungsdauer oder -häufigkeit den Wasserdurchfluß exakt einzustellen ermöglichen. Die Betätigung der Stößel erfolgt durch mehrere oder durch einen, mindestens die Oberfläche oder auch das gesamte Gehäuse abdeckenden, als Schaltwippe ausgebildeten Taster, der in unbetätigtem Zustand eine Lage einnimmt, in der dieser gegenüber den Stößeln einen bestimmten Abstand aufweist. Die Steuerung des den Flüssigkeitsdurchfluß einstellenden Dic..tkegels erfolgt unter Verwendung des das Flüssigkeitssteuerventil durchfließenden Wassers, was zur Folge hat, daß darin befindliche Verunreinigungen in Form von Schwebeteilchen oder dgl. sich im Steuerventil absetzen und neben dem durch die Hubbewegung des Kolbens verursachten Verschleiß zu einer Funktionsbeeinträchtigung führen können, insbesondere dann, wenn dadurch die zur Abdichtung der Stößel verwendeten O-Ringe in ihrer Wirkung eingeschränkt werden und geringste aus-

0219832

tretende Wassermengen in die oberhalb der Membrane angeordnete Kammer zu einer Änderung des Volumens führt. Findet durch derartige Leckströme in der den Dichtkegel in die Öffnungslage überführenden Kammer eine Volumenzunahme statt, so führt dies zum unbeabsichtigten,unter Umständen zum vollständigen Öffnen des Flüssigkeitssteuerventils, was, insbesondere bei unbemerktem Eintreten,über längere Zeit zu erheblichen Schäden führen kann.

Durch die Erfindung soll nun ein hydraulisch geregeltes Flüssigkeitssteuerventil der eingangs erwähnten Art so ausgebildet werden, daß eine unbeabsichtigte und unkontrollierte, durch äußere Einflüsse oder durch aus dem Steuerventilbereich austretende geringste Flüssigkeitsmengen bewirkte andauernde Zustandsänderung der Steuerventileinstellung, insbesondere in unbetätigter, d.h. geschlossener Stellung des Flüssigkeitssteuerventils,wirksam unterbunden wird.

Die Aufgabe wird bei dem eingangs erwähnten Flüssigkeitssteuerventil dadurch gelöst, daß eine Steuerventileinstellungsänderungen verursachende Volumenänderung und des dadurch bewirkten Flüssigkeitsaustritts mittels einer durch Federn exakt definierten und zusätzlich durch ein Fixierelement festlegbare aber aufhebbaren Lage zwischen Steuerventil und Taster einerseits und durch zwei oder mehrteilige, eine Membrane und eine Ringdichtung aufweisende Stößel - Steuerventilanordnung andererseits,ein unbeabsichtigter Flüssigkeitsaustritt wirksam verhindert wird.

In unbetätigtem, d.h. geschlossenem Zustand des Flüssigkeitssteuerventils befinden sich der Taster, welcher vorteilhaft aus einer Schaltwippe besteht, und die Grundkörperoberseite in paralleler Lage zueinander, ohne, daß die
zur Betätigung der Steuerkolben mit einer Membrane von
diesen flüssigkeitsdicht getrennten und aus der Gehäuseoberseite vorstehenden Stößel berührt werden. Jedem Betätigungsfeld, der beiderseits auf der mittig gelagerten
Schaltwippe, ist eine Feder zugeordnet, die den unbetätigten Zustand des Flüssigkeitssteuerventils in einer
stabilen Lage fixieren. Durch leichten, in Richtung auf
den Grundkörper gerichteten Druck auf eines der beiden
Tastenfelder, kann das Flüssigkeitssteuerventil beliebig
geöffnet oder geschlossen werden, wobei die Schließlage zusätzlich lösbar fixierbar ist, indem ein zwischen Grundkörper und dem Schließventil zugeordneten Tastenfeld angeordneter Magnet, eine Kugelraste oder dgl. die Schaltwippe in
der Schließlage kraftschlüssig festlegt.

Das Öffnen des unbetätigten Flüssigkeitssteuerventils erfolgt einfach dadurch, indem die stabile Lage des Flüssigkeitssteuerventils durch Druck auf das dem Öffnungsventil
zugeordnete Tastenfeld aufgehoben wird, mit der Wirkung,
daß dieses nach Durchlaufen eines bestimmten Schwenkwinkels auf dem Stößel des Öffnungsventils auftreffend, den
Steuerkolben in Richtung auf seinen unteren Totpunkt verschiebt und in Abhängigkeit der Betätigungsdauer oder
-häufigkeit, durch Veränderung des auf den Schließkegel
wirkenden Flüssigkeitsvolumen, das Flüssigkeitssteuerventil proportional öffnet. Nach Freigabe der Schaltwippe
verbleibt das so auf eine bestimmte Durchflußmenge eingestellte Flüssigkeitssteuerventil konstant und die Schaltwippe kehrt durch Federdruck in ihre unbetätigte Ausgangslage zurück.

Das Schließen des Flüssigkeitssteuerventils erfolgt in analoger Weise, indem das dem Schließventil zugeordnete Tastenfeld mit leichtem Druck betätigt wird. Nach vollständigem Durchlaufen des Schwenkwinkels jedoch kommt das Tastenfeld im Winkel schräg zur Oberfläche des Grundkörpers an dessen äußeren Oberflächenkante zu liegen und wird in dieser Stellung durch einen im Grundkörper integrierten und mit dessen Oberfläche abschließenden oder auf dieser Oberfläche angeordneten Fixierelement lösbar festgelegt.

Durch die kontinuierliche Betätigung des Steuerventils Schließen ist dieses Ventil immer geöffnet, so daß sich das Flüssigkeitsvolumen in der oberhalb der Membrane angeordneten Kammer durch die ständig geöffnete Verbindung mit dem Auslauf vollständig abbaut. Ungeachtet der weiteren erfindungsgemäßen Merkmale wäre also ein unbeabsichtigtes und unkontrolliertes Öffnen des Flüssigkeitssteuerventils auch dann nicht möglich, wenn austretende Leckströme in die oberhalb der Membrane angeordnete, zum Verschieben des Schließkegels in die das Flüssigkeitssteuerventil öffnende Stellung vorgesehene Kammer eintreten würden, da diese Kammer durch das geöffnete Schließventil immer mit dem Auslauf in Verbindung steht, so daß eventuell auftretende Leckströme sofort über den Auslauf abgeleitet würden.

Unbeabsichtigte, Flüssigkeitssteuerventileinstellungsänderungen bewirkende Volumenänderungen werden in der Kammer jedoch bereits dadurch wirksam vermieden, indem die eine Volumenänderung bewirkenden, durch das Nachlassen der Federwirkung und durch Beschädigungen der in den Steuerventilen angeordneten O - Ringe verursachten Leckströme, nach der Erfindung durch Einsetzen einer Ringdichtung und durch den auf die untere ringförmige

0219832

Durchmessererweiterung wirkenden Flüssigkeits- und Federdruck des Steuerkolbens unterbunden werden.

Das erfindungsgemäße Flüssigkeitssteuerventil ist in seinem konstruktiven Aufbau relativ einfach und durch die
Integration, von die Steuerventile gegenüber der Atmosphäre, sowie gegenüber der oberhalb der Membrane zur Betätigung des Schließkegels angeordneten Kammer, durch eine
Ringdichtung gegen unbeabsichtigten und unkontrollierten
Flüssigkeitsaustritt gesichert.

Bei vollständiger Unterbrechung des Flüssigkeitsdurchflußes wird zusätzlich durch die lösbare Festlegung der
Schaltwippe in der Stellung Schließen unter Verwendung
eines oder mehrerer Magnete, Kugelrasten oder durch andere
bekannte Mittel, ein hohes Maß an Schaltsicherheit erreicht. Der Aufbau des erfindungsgemäßen Flüssigkeitssteuerventils zeichnet sich des weiteren durch seine einfache Betätigung, relative Wartungsfreiheit und durch die
Variation der Tastzeit oder -häufigkeit exakten Einstellbarkeit aus. Das genaue Schaltverhalten, als auch die
hohe Schaltsicherheit machen dieses Flüssigkeitssteuerventil geeignet, um überall dort eingesetzt zu werden, wo der
Durchfluß flüssiger Medien im Zusammenhang mit Sicherheit
und Genauigkeit steht. Auch für die Verwendung im Sanitärbereich ist dieses Flüssigkeitssteuerventil bestens geeignet und kann beispielsweise als Wasserhahn, bei Kombination von zwei Flüssigkeitssteuerventilen der erfindungsgemäßen Art als Mischbatterie oder auch zur Steuerung eines
Duschventils verwendet werden.

Die Erfindung wird nachstehend anhand der Zeichnungen erläutert, in der ein erstes und ein zweites Ausführungsbeispiel des erfindungsgemäßen, hydraulisch geregelten Flüssigkeitssteuerventils dargestellt ist. Es zeigen

- 6 -

0219832

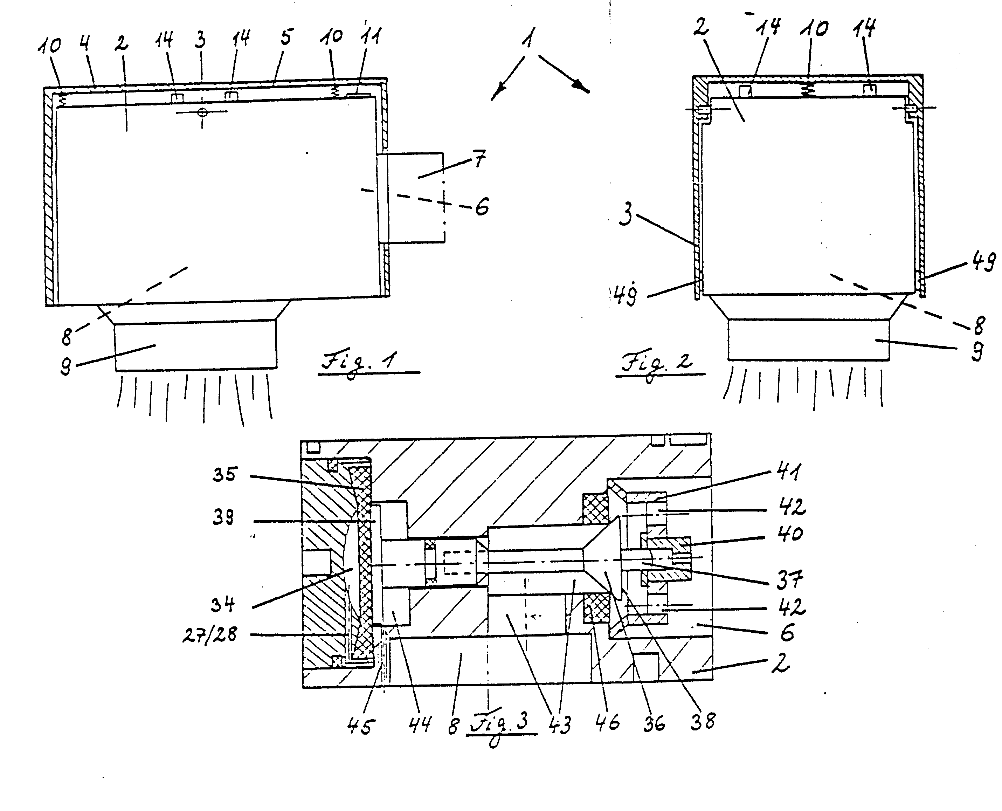

Fig. 1   Das Flüssigkeitssteuerventil nach der Erfindung, mit im Längsschnitt dargestellter Schaltwippe und dem Grundkörper in der Draufsicht.

Fig. 2   Das Flüssigkeitssteuerventil nach Figur 1, mit im Querschnitt dargestellter Schaltwippe und dem Grundkörper in der Draufsicht, mit der dem Benutzer zugewandten Stirnseite.

Fig. 3   Einen Schnitt durch die Längsachse des Grundkörpers nach Figur 1.

Fig. 4   Einen Längsschnitt durch den Grundkörper nach Figur 1 in der Ebene des Öffnungsventils.

Fig. 5   Einen Längsschnitt durch den Grundkörper nach Figur 1 in der Ebene des Schließventils nach einem ersten Ausführungsbeispiel der Erfindung.

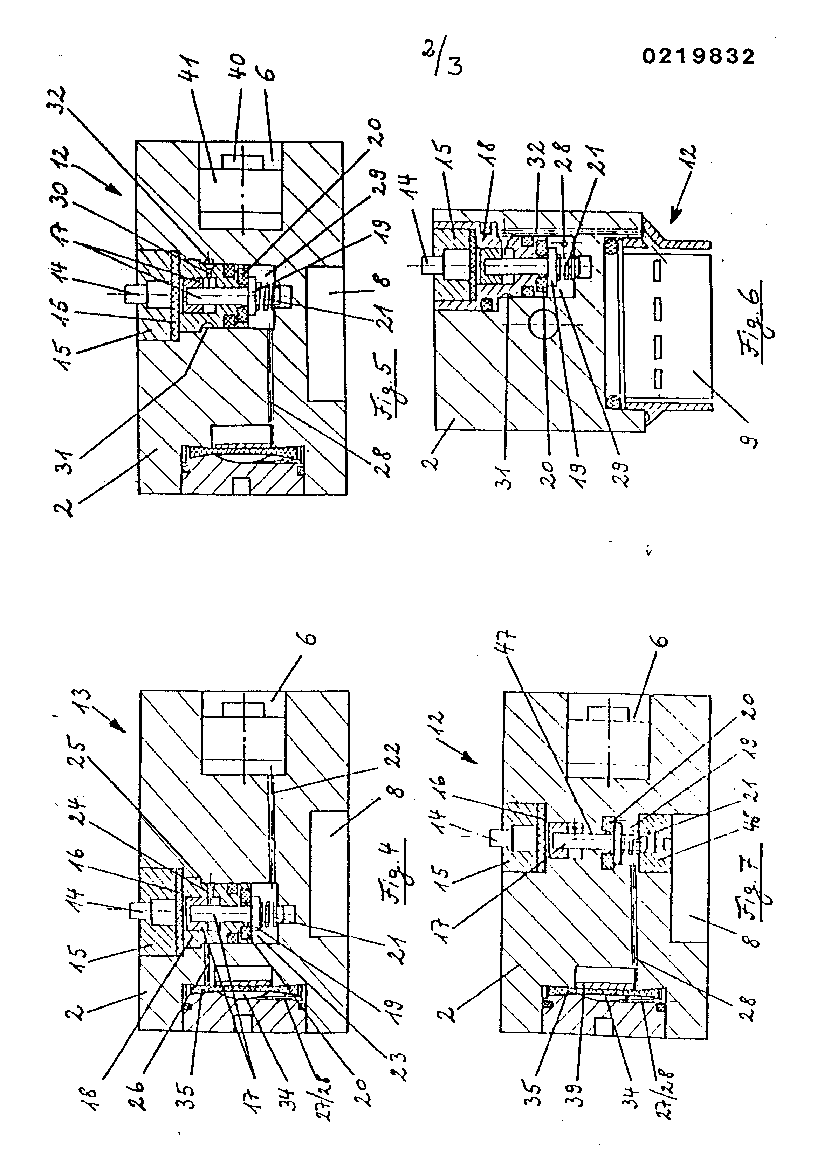

Fig. 6   Einen Schnitt entlang der Linie V - V nach Figur 5, mit einem im Auslauf eingesetzten Perlator.

Fig. 7   Einen Längsschnitt durch den Grundkörper nach Figur 1 in der Ebene des Schließventils nach einer zweiten Ausführungsform der Erfindung.

Fig. 8   Einen Längsschnitt durch durch das Schließ- bzw. Öffnungsventil nach einer weiteren Ausführungsform der Erfindung.

Fig. 9   Eine Darstellung des erfindungsgemäßen Flüssigkeitssteuerventils mit im Querschnitt dargestellter Wippe und den Grundkörper in der Draufsicht, mit einer mit den Grundkörper untergreifenden Verlängerungen der Schaltwippe und darauf angeordneten Fixiermitteln.

Das hydraulisch geregelte Flüssigkeitssteuerventil 1 besteht nach einer ersten Ausführung der Erfindung im wesentlichen aus einem Grundkörper 2,der von einer Schaltwippe 3 bis auf den Zulauf 6 und Auslauf 8 vollflächig überdeckt wird. Zwei im Grundkörper 2 angeordnete, über zwei die Grundkörperoberfläche überragende Stößel 14 zu betätigende Steuerventile 12,13 stehen über im gemeinsamen Grundkörper 2 angeordnete Kanäle 22,24,26,27,28,30,32, mit der durch eine elastische Membrane 35, den Schließkegel 36 durch axiale Verschiebung steuernden Kammer 34 in unmittelbarer Wirkverbindung.

Zum Anschluß an die flüssigkeitsführende Rohrleitung 7 einerseits und zur Aufnahme eines Perlator 9 andererseits weist der Grundkörper 2 auf der dem Benutzer abgewandten Seite eine entsprechende Gewindebohrung für den Zulauf 6 und·auf der der Schaltwippe 3 gegenüberliegenden Grundkörperunterseite eine entsprechende Gewindebohrung für den Auslauf 8 auf, wobei diese miteinander über einen gemeinsamen,absperrbaren Kanal 43 in direkter Verbindung stehen.

Die zur Steuerung des Flüssigkeitsdurchflußes im Grundkörper 2 angeordneten Steuerventile 12, 13 sind zweiteilig ausgebildet und bestehen aus einer einen Stößel 14 axial verschiebbar aufnehmenden Führung 15 und einem sich daran anschließenden, über eine Schraubverbindung miteinander festgelegten und eine elastische Membrane 16 einschließenden, den Steuerkolben 17 mit geringem Spiel aufnehmenden Ventilkörper 18.Bei dem Öffnungsventil 13 steht der unterhalb des Ventilkörpers 18 befindliche Ringraum 23 über einen Kanal 22 zur Zuführung des flüssigen Steuermediums unmittelbar mit dem Zuführungskanal 6 in Verbindung, so daß bei Betätigung des Öffnungsventils 13 zwischen Steuerkolben 17 und dem freien Volumen des Ventilkörpers 18 aufsteigende flüssige Medium in die oberhalb der elastischen Membrane 35 angeordnete Kammer 34 gelangt.

In der Schließstellung des Flüssigkeitssteuerventils 1 befindet sich der durch den Schließventilstößel 14 betätigte Steuerkolben 17 in seiner unteren Totpunktlage, so daß die oberhalb der Membrane 35 angeordnete Kammer 34 über den Rückführungskanal 28 mit dem unterhalb des Schließventilkörpers 18 befindlichen Ringraum 29 und dem zwischen Steuerkolben 17 und dem Ventilkörperinnenraum verbleibenden Ringraum über den Kanal 30, die Ringsicke 31 und über den Kanal 32 mit dem Auslauf 8 direkt verbunden ist.

Um das Austreten von Leckströmen zu verhindern, weisen die Steuerventile 12, 13 an ihren unteren Enden jeweils einen Dichtring 20 auf, der mit einer oberen Schulter der Ringerweiterung 19 des Steuerkolbens 17 zusammenwirkt und sich durch den auf dessen Unterseite wirkenden Flüssigkeitsdruck einerseits und durch den Druck der Feder 21 andererseits dichtend aneinanderlegen. Durch die gegenseitige Unterstützung des Flüssigkeits - und Federdruckes wird wirksam verhindert, daß bei nachlassender Wirkung der Feder 21 die Abdichtung teilweise oder vollständig aufgehoben wird und dadurch Leckströme auftreten können.

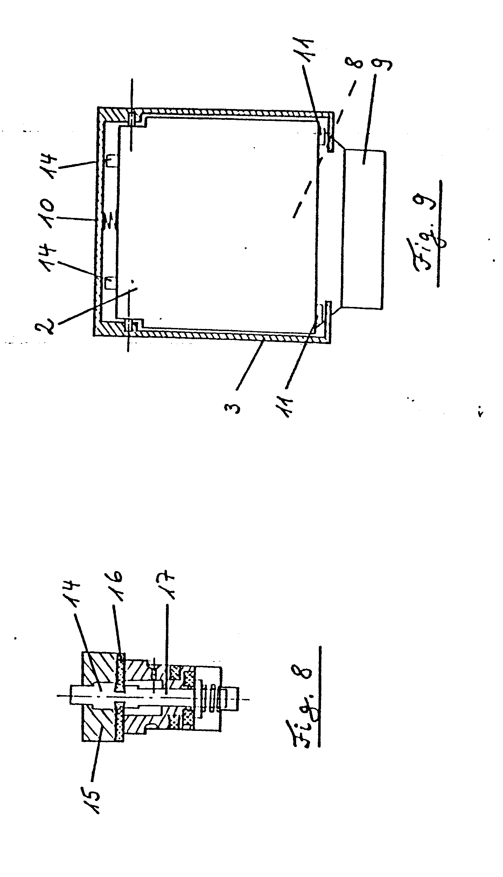

Das hydraulisch regelbare Flüssigkeitssteuerventil 1 weist nach einer zweiten Erfindung, welches wegen des identischen Aufbaus zwischen Öffnungs- 13 und Schließventil 12 nur in einer zusätzlichen Figur 7 dargestellt ist, aus Kostengründen einen vereinfachten konstruktiven Aufbau auf, wobei der Ventilkörper der beiden Steuerventile 12, 13 jeweils durch eine im gemeinsamen Grundkörper angeordnete zylindrische Ausnehmung 47 zur axial verschiebbaren Aufnahme des Steuerkolbens 17 ersetzt wurde.

Zwischen der zylindrischen Ausnehmung 47 und der Führung 15 des Stößels 14 ist eine das Steuerventil 12 gegenüber der Atmosphäre abdichtende und die Bewegung des Stößels 14 auf den Steuerkolben 17 übertragende, elastische Membrane 16 austauschbar festgelegt.

Im Bereich der unteren,eine Ringschulter bildende Steuerkolbenerweiterung 19, ist die Zylinderausnehmung 23 im
Durchmesser erweitert, um den Steuerkolben 17 axial verschiebbar und mit einer Feder 21 gegen die Ringdichtung
20 abstützend, mittels einer in der Ausnehmung festlegbaren Führung 48 aufzunehmen.

Die das obere, im Durchmesser erweiterte Ende 39 des
Schließkegels 36 aufnehmende Zylinderkammer 44 ist zum
Druckausgleich über den Kanal 45 und den Auslauf 8 mit der
Atmosphäre verbunden. Die zylindrische Schließkolbenverlängerung 37 ist in einer an der Unterseite öffenen
Buchse 40 und einer Aufnahme 41 axial verschiebbar im
Grundkörper 2 angeordnet. Um den Zulauf 6 mit dem Auslauf
8 in Abhängigkeit der Einstellung des Schließkegels 36
miteinander zu verbinden, weist die Aufnahme 41 mehrere
Durchbrechungen 42 auf.

Die einzelnen im gemeinsamen Grundkörper angeordneten
Teile sind, soweit dies aus Gründen der Abdichtung erforderlich ist, unter Einschluß von Dichtungen miteinander
festgelegt, ohne, daß dies hier im einzelnen erwähnt zu
werden braucht.

Aus Gründen einer leichten Montage, Reparatur oder einem
erforderlichen Austausch, können die obere und untere Führung, sowie die Ventilkörper mittels Gewinde im gemeinsamen Grundkörper festgelegt sein. Ist eine Reparatur oder
Wartung auszuschließen, so ist es möglich,die Führung und
den Ventilkörper, sowie die weiteren in den gemeinsamen
Grundkörper eingeschraubten Teile des Flüssigkeitssteuerventils durch Kleben, Einpressen oder andere bekannte Arbeitsverfahren unlösbar im gemeinsamen Grundkörper festzulegen.

Zur Betätigung des Flüssigkeitssteuerventils 1 ist es, ausgehend von der unbetätigten Steuerlage, lediglich erforderlich, das dem Öffnungsventil 13 zugeordnete Tastenfeld 4, des vorteilhaft als Schaltwippe ausgebildeten Tasters 3, gegen die Wirkung der Federn 10,21, in Richtung auf die Grundkörperoberseite zu verschwenken, bis die Tastenfeldunterseite, an dem Stößel 14 angreifend, unter dessen weiteren Mitnahme den Steuerkolben 17 gegen die Wirkung der Federn 10,21 in seine untere Totpunktlage verschiebt: Hierbei wird der dichtende Abschluß zwischen Ringdichtung 20 und der oberen Schulter der Durchmessererweiterung 19 im Bereich des unteren Steuerkolbens aufgehoben, so daß die am Anschluß 6 anstehende Flüssigkeit über den Kanal 22 durch den Ringraum 23 und den zwischen Steuerkolben 17 und Ventilkörperinnenraum verbleibenden Ringraum, die Öffnung 24, die Ringsicke 25 und die sich daran anschließenden Kanäle 26,27 in die oberhalb der Membrane 35 angeordnete Kammer 34 strömt und einen in Richtung gegen den Dichtkegel 36 wirkenden Druck aufbaut, womit dieser in Abhängigkeit der Tastenfeldbetätigung von seiner Dichtung 46 abhebend den Verbindungskanal 43 zwischen Zu- 6 und Auslauf 8 freigibt. Durch die zeitliche Länge oder Häufigkeit der Tastenfeldbetätigung kann somit der Flüssigkeitsdurchfluß mit dem Flüssigkeitssteuerventil 1 individuell und sehr feinfühlig eingestellt werden.

Die Reduzierung des Flüssigkeitsdurchflußes oder das Schließen des Flüssigkeitssteuerventils 1 erfolgt einfach durch Betätigung des dem Schließventil 12 zugeordneten Tastenfeld 5 in analoger Weise, wie vorstehend beschrieben, wobei durch das Verschieben des Steuerkolbens 17 in seine untere Totpunktlage der in den Auslauf 8 mündende Kanal 32 mit der oberhalb der Membrane 35 angeordneten Kammer 34 verbunden wird, so daß sich das darin aufgebaute Flüssigkeitsvolumen wiederum in Abhängigkeit der Tastenfeldbetägigung teilweise oder vollständig entleeren kann. Durch diese Reduzierung des Kammervolumens findet gleichzeitig eine Verminderung des auf die obere Fläche 39 des Schließkegels 36 wirkenden Druckes statt, womit der in der Zuführung 6 anstehende und auf die untere Fläche 38 des Schließkegels wirkende Leitungsdruck, den Schließkegel in Abhängigkeit der Betätigung des Schließventils 12, teilweise oder vollständig in die geschlossene Lage des Flüssigkeitssteuerventils 1 überführt.

Um ein unbeabsichtigtes Öffnen des Flüssigkeitssteuerventils aus den bereits erwähnten Gründen zu verhindern, ist ein zusätzliches Sicherungselement, in Form eines Magneten 11 eingebaut, der nach vollständigem Durchlaufen des Federweges der Federn 10,21 den Taster 3 an der Grundkörperoberseite, unter gleichzeitig vollständigem Öffnen des Schließventils 12, lösbar festlegt, so daß sich in der Kammer 34 kein Volumen ansammeln kann, welches den Schließkegel 36 in eine öffnende Stellung verschiebt. Durch diese konstruktive Maßnahme wird verhindert, daß bereits geringste Flüssigkeitsmengen unbeabsichtigt und unkontrolliert aus dem Flüssigkeitssteuerventil austreten können.

In weiterer Ausbildung der Erfindung ist es denkbar, anstelle eines oder mehrerer Permanentmagnete, bei vollflächiger Überdeckung mit der Schaltwippe, andere Fixierelemente, wie z.B. Kugelrasten oder dgl. zu verwenden, die in entsprechende Vertiefungen oder Ausnehmungen lösbar eingreifen, um so die Schaltwippe in der dadurch gesicherten Schließlage des Flüssigkeitssteuerventils lösbar festzulegen.

1

Eberhard Armingeon

Ringstraße 11

7538 Keltern 2

P a t e n t a n s p r ü c h e

================================

1. Hydraulisch regelbares Flüssigkeitssteuerventil mit zwei in einem gemeinsamen Grundkörper angeordneten, über zwei getrennte oder über einen als Schaltwippe ausgebildeten Taster in Abhängigkeit der Betätigungsdauer oder -häufigkeit zu betätigende Steuerventile, dadurch gekennzeichnet, daß im Bereich des Tasters (3) mindestens ein Fixierelement (11) angeordnet ist, und, daß jedem der beiden zwei- oder mehrteilig ausgebildeten Steuerventilen (12, 13) zusätzlich ein Federpaar (10, 21), eine Membrane (16) und eine Ringdichtung (20) zur Vermeidung eines unbeabsichtigten und unkontrollierten, schaltstellungsänderungsbedingten Flüssigkeitsaustritts, im gemeinsamen Grundkörper (2) zugeordnet sind.

2. Hydraulisch regelbares Flüssigkeitssteuerventil nach Anspruch 1, dadurch gekennzeichnet, daß die Steuerventile, zur Vermeidung eines unbeabsichtigten Flüssigkeitsaustritts, aus einem zweiteiligen, eine obere Führung (15) mit darin axial verschiebbarem Stößel (14) und einem unteren, einen Steuerkolben (17) aufnehmenden, einen Ventilkörper (18) aufweisenden Öffnungs- (13) und Schließventil (12) bestehen , die zur Abdichtung zwischen Führung und Ventilkörper eine elastische Membrane (16) austauschbar im gemeinsamen Grundkörper (2) miteinander festlegen, und, daß der Steuerkolben der beiden Steuerventile an seinem unteren Ende eine Durchmessererweiterung (19) aufweist, die sich durch die Feder (21) und durch den angrei-fenden Flüssigkeitsdruck unterstützt, abdichtend an die Ringdichtung (20) anlegt.

3. Hydraulisch regelbares Flüssigkeitssteuerventil nach Anspruch 1,
dadurch gekennzeichnet, daß die Steuerventile (12, 13) zur Vermeidung eines unbeabsichtigten Flüssigkeitsaustritts, aus einem
mehrteiligen, eine obere Führung (15) mit darin axial verschiebbarem Stößel (14) und einem unteren, eine im gemeinsamen Grundkörper (2) senkrecht zur Grundkörperoberfläche angeordnete, den
Steuerkolben (17) aufnehmende und aus der den unteren Ventilkörper bildenden Zylinderausnehmung (47) aufweisenden Öffnungs-
(13) und Schließventil (12) bestehen, die zur Abdichtung
zwischen Führung und Ventilkörper eine elastische Membrane (16)
austauschbar miteinander festlegen, und, daß eine in der im
Durchmesser erweiterten unteren Zylinderausnehmung (23) festgelegte Führung (47) den Steuerkolben mit einer Feder (21) gegen
die Ringdichtung (20) axial verschiebbar abstützt.

4. Hydraulisch regelbares Flüssigkeitssteuerventil nach Anspruch 1
bis 3, dadurch gekennzeichnet, daß die Durchmessererweiterung
(19) am unteren Stuerkolbenende beidseitig mit senkrecht zur
Kolbenlängsachse ebene Ringschultern bildet, wobei sich die
der Ringdichtung (20) zugewandte Ringschulter durch die an der
unteren Ringschulter angreifende Feder (21) und den Flüssigkeitsdruck dichtend an die Ringdichtung anlegt.

5. Hydraulisch regelbares Flüssigkeitssteuerventil nach Anspruch
1 bis 3, dadurch gekennzeichnet, daß die Durchmessererweiterung
(19) am unteren Steuerkolbenende auf der der Ringdichtung (20)
zugewandten Seite kegelstumpfförmig und auf der gegenüberliegenden Seite in Form einer Ringschulter für den daran angreifenden Flüssigkeits- und Federdruck ausgebildet ist, der
die kegelige Durchmessererweiterung dichtend an die Ring-

-3-

dichtung (20) anlegt.

6. Hydraulisch regelbares Flüssigkeitssteuerventil nach Anspruch 1 bis 5, dadurch gekennzeichnet, daß der in der oberen Führung (15) axial verschiebbare Stößel (14) und der in einem unteren Ventilkörper (18) gegen die Wirkung des Federpaares (10, 21) verschiebbar gelagerte Steuerkolben (17) lösbar miteinander festgelegt sind und im Bereich ihrer lösbaren Verbindung eine Membrane (16) abdichtend miteinander festlegen.

7. Hydraulisch regelbares Flüssigkeitssteuerventil nach Anspruch 1 bis 3, dadurch gekennzeichnet, daß das Fixierelement (11) ein Permanentmagnet ist, der bei vollständiger oder teilweiser nur die Gehäuseoberseite durch den Taster (3) erfolgten Überdeckung, erhaben oder versenkt im Grundkörper (2) angeordnet ist und, daß der Taster nach vollständigem Durchlaufen des Federweges den Stößel (14) des Schließventils (12), entgegen der Wirkung des Federpaares (10, 21), in der das Schließventil öffnenden Lage lösbar festlegt.

8. Hydraulisch regelbares Flüssigkeitssteuerventil nach Anspruch 1 bis 3, dadurch gekennzeichnet, daß bei vollflächiger Überdeckung des Grundkörpers (2) durch den in Form einer Schaltwippe ausgebildeten Taster (3), das Fixierelement (11) als Permanentmagnet ausgebildet, am Grundkörper, im Bereich der Stirnflächen, oder im Bereich der beiden Seitenflächen, erhaben oder versenkt angeordnet ist und den Taster nach Durchlaufen des vollständigen Federweges der Federn (10, 21), in der das Schließventil öffnenden Lage lösbar festlegt.

9. Hydraulisch regelbares Flüssigkeitssteuerventil nach Anspruch 1 bis 3, dadurch gekennzeichnet, daß der den Grundkörper (2) teilweise oder vollflächig überdeckende, als Schaltwippe ausgebil-

-4-

dete Taster (3) mindestens ein Fixierelement (11) in Form eines Permanentmagneten aufweist, der den Taster, nach vollständigem Durchlaufen des Federweges der Federn (10, 21), mit dem Grundkörper oder einem damit ausgestatteten Gegenpol im Bereich der Grundkörperoberseite, der Grundkörperstirnseiten oder mit einem der beiden Grundkörperseitenflächen, in der das Schließventil öffnenden Lage lösbar festlegt.

10. Hydraulisch regelbares Flüssigkeitssteuerventil nach Anspruch 1 bis 3, dadurch gekennzeichnet, daß mindestens in einer der Außenflächen des Grundkörpers (2) als Fixierelement (49) federvorgespannte Kugelrasten oder -stifte angeordnet sind, die nach vollständigem Durchlaufen des Federweges der Feder (10, 21), in entsprechende Vertiefungen oder Ausnehmungen des den Grundkörper teilweise oder vollflächig überdeckenden, in Form einer Schaltwippe ausgebildeten Taster (3) eingreifend, das Schließventil in seiner offenen Lage lösbar festlegen.

Fig. 1

Fig. 2

Fig. 3

1/3

0219832

Fig.5

Fig.6

Fig.4

Fig.7

14
15
16
17

Fig. 8

2 14 10 14

3

11    11

8
9

Fig. 9

0219832

Europäisches
Patentamt

# EUROPÄISCHER RECHERCHENBERICHT

| EINSCHLÄGIGE DOKUMENTE | | | EP 86114427.7 | |
|---|---|---|---|---|
| **Kategorie** | **Kennzeichnung des Dokuments mit Angabe, soweit erforderlich, der maßgeblichen Teile** | | **Betrifft Anspruch** | **KLASSIFIKATION DER ANMELDUNG (Int. Cl.4)** |
| A | CH - A - 26 716 (DUSCHANEK)<br>* Gesamt *<br>-- | | 1 | F 16 K 31/00<br>F 16 K 21/00 |
| A | DE - A1 - 2 200 671 (KNAPP)<br>* fig. 1,2; Pos.no. 10 *<br>-- | | 1 | |
| A | DE - A1 - 2 416 286 (G. ROST)<br>* Fig. 1-3 *<br>-- | | 1 | |
| A | DE - A1 - 2 504 404 (ARISLAND)<br>* Gesamt *<br>-- | | 1 | |
| D,A<br>P | DE - A1 - 3 439 235 (ARMINGEON)<br>* Gesamt *<br>-- | | 1-10 | **RECHERCHIERTE SACHGEBIETE (Int. Cl 4)** |
| A | US - A - 3 340 773 (FRANZ)<br>* Fig. 1,2 *<br>---- | | 1 | F 16 K 21/00<br>F 16 K 31/00<br>G 01 F 11/00 |

Der vorliegende Recherchenbericht wurde für alle Patentansprüche erstellt.

| Recherchenort | Abschlußdatum der Recherche | Prüfer |
|---|---|---|
| WIEN | 11-12-1986 | BAUMANN |